# EUROPEAN PATENT APPLICATION

(11) **EP 4 654 132 A1**
(43) Date of publication of application: **26.11.2025**
(21) Application number: 25176935.2
(22) Date of filing: 16.05.2025
(51) Int. Cl.: G06T 9/00, H04N 19/503

(54) **VIDEO STREAMING SYSTEM AND METHOD**

(30) Priority: 21.05.2024 GB 202407208
(71) Applicant: Sony Interactive Entertainment Inc., Tokyo 108-0075 (JP)
(72) Inventor: MOTILLA, Daniel Montero, London, W1F 7LP (GB); BIGOS, Andrew James, London, W1F 7LP (GB); BARMAN, Nabajeet, London, W1F 7LP (GB)
(74) Representative: D Young & Co LLP

(57) **Abstract**

A system comprising a server configured to stream video content comprising a plurality of rendered image frames to a client device, the server comprising a geometry processing unit configured to perform a geometry pass on a scene being rendered to generate geometric information, wherein the geometry processing unit is configured to output one or more motion vectors, a transmitting unit configured to transmit the one or more motion vectors to the client device, a lighting processing unit configured to perform a lighting pass on the scene being rendered in dependence upon the generated geometric information, and a residual calculation unit configured to generate residual information indicative of a difference between an image frame rendered on the basis of the geometry pass and the lighting pass, and a preceding rendered image frame in the video content which has been motion compensated by applying the one or more motion vectors to the preceding rendered image frame, wherein the transmitting unit is configured to transmit the residual information to the client device.

## Description

### BACKGROUND OF THE INVENTION

### Field of the invention

This disclosure relates to a video streaming system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present invention.

Over time the streaming of video content has become more popular, at least in part due to technological advances which support this. For instance, high-speed internet has become more commonplace whilst ever more efficient video codecs are being developed. In this manner, content such as movies and television shows are able to be distributed on demand to users in an efficient and effective manner.

Rather than being limited to the streaming of pre-existing video content, it is also considered desirable for users to be able to stream video content corresponding to software being executed remotely. Cloud computing or cloud gaming arrangements may be preferable for a number of users in that more advanced processing hardware can be leveraged (for instance, at a server) without the user having to purchase that hardware directly. Such an advantage can lead to users on low-powered devices (such as mobile phones, handheld games consoles, or older computers) being able to access content for which they do not meet the basic processing requirements as long as they have an internet connection.

While there are significant advantages to cloud computing arrangements, there are also a number of limitations which can negatively impact the user experience. One such limitation is that of latency; in an arrangement which has high latency, the delay between a user's inputs and the implementation of these may be sufficient to cause input errors. Similarly, a user's performance may suffer in a game due to latency due to an increase in the time taken for them to respond to an event.

A number of arrangements have been implemented to reduce the latency associated with streaming content. One of these is the use of edge servers, which shorten the transmission path that content takes - thereby lowering the latency as it takes less time for communications to travel between the server and the client. However there is still a desire for further latency reductions in content streaming arrangements.

It is in the context of the above discussion that the present disclosure arises.

### SUMMARY OF THE INVENTION

This disclosure is defined by claim 1. Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an entertainment system;
Figure 2 schematically illustrates a streaming system;
Figure 3 schematically illustrates a server operation method;
Figure 4 schematically illustrates a client device operation method;
Figure 5 schematically illustrates a server configured to stream video content;
Figure 6 schematically illustrates a client device receiving the streamed video content; and
Figure 7 schematically illustrates a video content distribution method.

### DESCRIPTION OF THE EMBODIMENTS

Referring now to the drawings, wherein like reference numerals designate identical or corresponding parts throughout the several views, embodiments of the present disclosure are described.

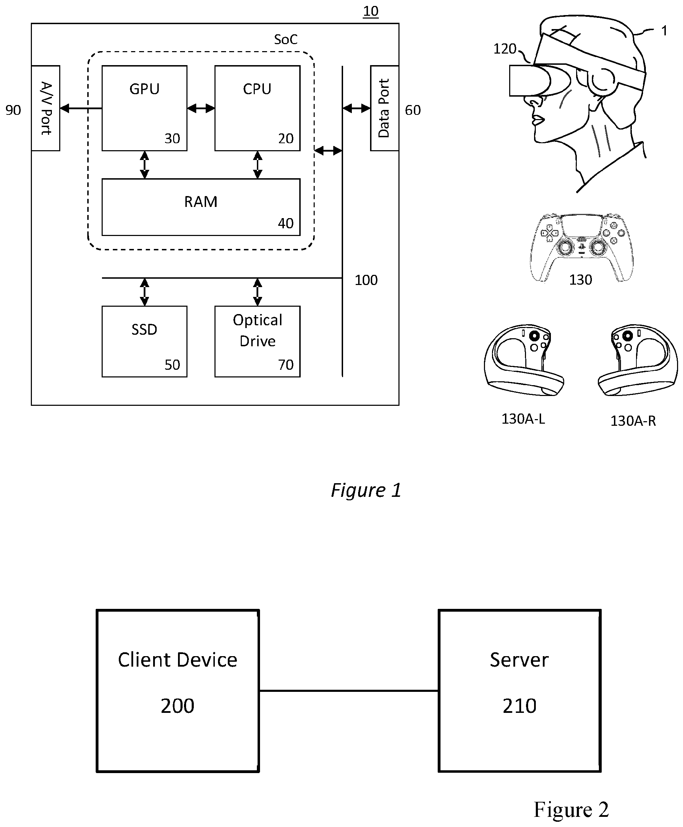

Referring to Figure 1, an example of an entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC).

Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1.

Interaction with the system is typically provided using one or more handheld controllers 130, and/or one or more VR controllers (130A-L,R) in the case of the HMD.

Figure 2 schematically illustrates a streaming system in accordance with implementations of the present disclosure. In this Figure, a single client device 200 is shown in communication via a network (represented by the line) with a server 210. Of course, in practice a plurality of client devices may be in communication with a single server, and a client device may be in communication with multiple servers at the same time.

The client device 200 may be implemented as an entertainment device 100 as shown in Figure 1, for example, or any other processing hardware. Examples of client devices include games consoles, mobile phones, other portable devices, computers, televisions, and laptops.

The server 210 may be implemented using any suitable processing hardware, and may include any suitable configuration of CPUs and/or GPUs required to perform processing of the content to be streamed to the client device (such as executing a game). Of course, the server 210 should also include communication means to enable communication with the client device 200 over the network connection.

The present disclosure is presented in the context of the rendering of video games so as to aid the clarity of the disclosure; however any rendered content may be considered suitable for use with such techniques. For instance, non-gaming computer applications may utilise similar techniques, as well as interactive videos or the like which would not typically be referred to as video games.

In previously proposed arrangements, a server is configured to render images which are then sent to the client for display. The transmission by the server typically includes one or more motions vectors along with residual data, which are transmitted to a client once they have both been derived. This information is then used by a decoder at the client to generate images for display.

These motion vectors are used by the client device when decoding the new image, as these describe the motion between frames and therefore allow the exploitation of redundancy between the current image frame and the previous one (inter-frame encoding). In other words, based upon the previous frame and these motion estimation vectors parts of the current frame can be derived.

The residual data is used to 'correct' the image obtained by applying motion vectors to the previous frame - the residual data is representative of the difference between the rendered frame and the motion-compensated frame generated from the previous frame.

Implementations according to the present disclosure seek to reduce the latency associated with rendering processes according to those previously proposed arrangements.

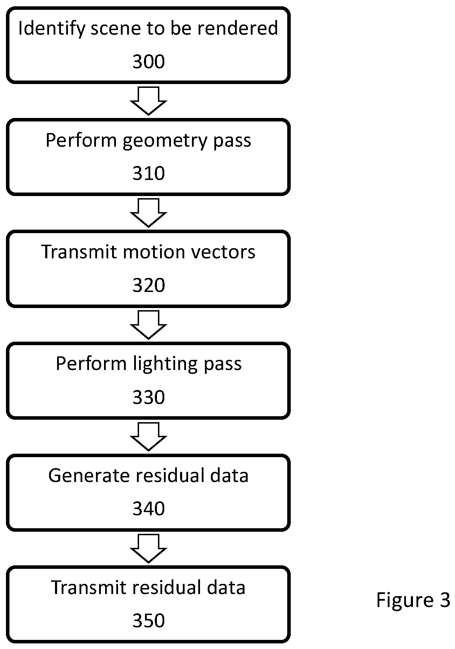

Figure 3 schematically illustrates a content rendering process executed by a server, in a cloud computing arrangement, which streams video content to a client device via a network connection. While the steps below are shown as being sequential steps, at least some of the processing may be performed in a parallelised manner in which the steps can overlap to some degree. For instance, the lighting pass can be started while the motion vectors are still being output. It is also noted that the method steps described here are not exhaustive - post processing steps or more detailed geometry/lighting passes may be performed as appropriate for the rendering of given content.

A step 300 comprises identifying a scene to be rendered. The scene may be a part of a video game, for instance, and may be defined in any suitable manner. For instance, the identification of the scene to be rendered can be based upon a camera position and viewport orientation/size as appropriate.

A step 310 comprises performing a geometry pass on the scene; this includes an initial rendering of the scene to generate geometric information such as depth, normal, and motion vectors. The geometry pass can include a number of different processing steps depending on the given implementation, and as such discussion of these individual steps is omitted to preserve the clarity and conciseness of the present discussion. One of the outputs of the geometry pass is a set of motion vectors indicating pixel motion between successive frames; these are stored in a motion vector buffer (also known as a velocity buffer).

A step 320 comprises transmitting the motion vectors from the motion vector buffer (also known as the velocity buffer) information to the client device via the network connection. This is performed at the time that the geometry pass is completed (or at the time that the motion vector buffer is populated, should this be different); while not necessarily immediate, it is considered that this step should be performed before initiating the lighting pass or at least before the lighting pass is completed.

A step 330 comprises performing a lighting pass on the scene; this includes processing to generate effects such as shadows and reflections, for example. This utilises the information output by the geometry pass performed in step 310, with the lighting effects being generated on the basis of the geometry of the scene. The lighting pass can include a number of different processing steps depending on the given implementation, and as such discussion of these individual steps is omitted to preserve the clarity and conciseness of the present discussion. Post-processing effects, such as motion blur, may be performed after the lighting pass as desired.

A step 340 comprises generating residual data representing the difference between the generated frame and the motion-compensated representation of the previous frame. The motion-compensated representation of the previous frame is generated by applying the motion vectors obtained in the geometry pass to that frame. This results in an image which is likely to be different to the currently-rendered frame in that occlusions/discocclusions and changing lighting effects can lead to new or different content being shown in the scene. Residual data may be calculated by subtracting the previously-rendered image from the newly-rendered image, for instance, or any other method of comparison.

A step 350 comprises transmitting the residual data to the client device via the network connection to complement the motion vectors transmitted previously in step 320. The residual data may be transmitted with an identifier which corresponds to the previously-transmitted motion vector data, for instance, so as to ensure that the respective sets of data are synchronised correctly. Alternatively, or in addition, each set of data may comprise an identifier which corresponds to the identity of the image frame to be rendered.

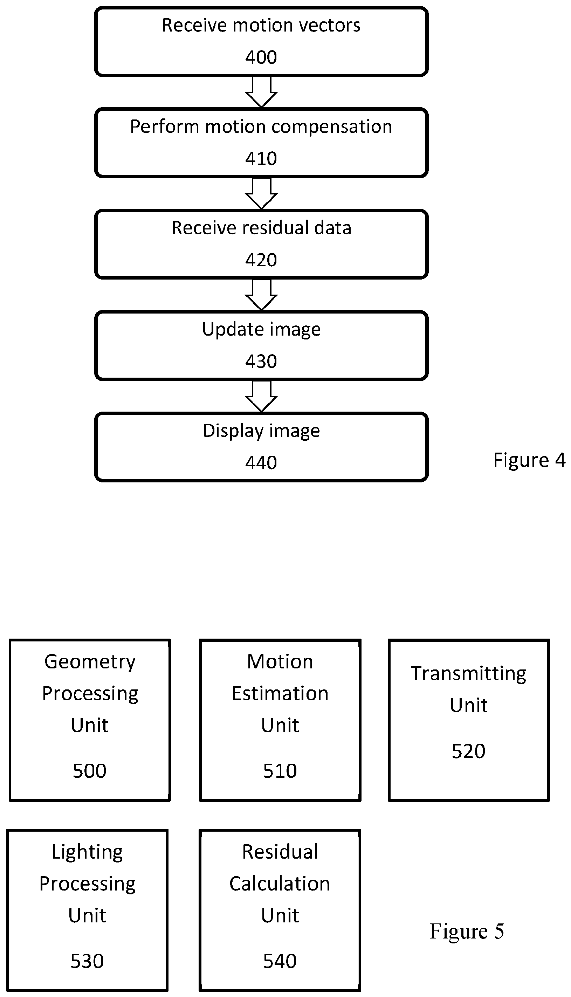

Figure 4 schematically illustrates a content display process executed by a client, in a cloud computing arrangement, which streams video content from a server via a network connection. While the steps below are shown as being sequential steps, at least some of the processing may be performed in a parallelised manner in which the steps can overlap to some degree. For example, the residual data can be received while the motion compensation step is being executed.

A step 400 comprises receiving motion vectors from the server via the network connection; these are the motion vectors transmitted in step 320 of Figure 3 as described above.

A step 410 comprises performing motion compensation using the received motion vectors. This may be performed by adjusting pixel locations (that is, translating pixel values to a new location) based upon the information comprised within the motion vectors, for instance. The motion compensation is performed on the previously-received image frame, generating a motion-compensated representation of that previous frame. As noted above, this motion-compensated frame may be missing information in a number of different image locations due to changing occlusions or may differ from the image for display due to varying lighting effects (which are not well-represented by the motion vectors).

A step 420 comprises receiving residual data from the server via the network connection; this data represents the differences between the motion-compensated frame and the new image frame as determined by the server in step 340 above (and transmitted in step 350).

A step 430 comprises updating the motion-compensated image generated in step 410 using the received residual data. This can include any suitable processing, such as modifying individual pixel values, based upon the residual data so as to obtain a completed image which corresponds to that rendered by the server.

A step 440 comprises displaying the image at an associated display device.

The purpose of the methods of Figures 3 and 4 is to transmit motion vector data before the rendering of the frame is completed; this can reduce the latency associated with the process as it enables the client device to begin the decoding process at an earlier time. This is in contrast to existing arrangements in which the motion information is transmitted alongside the residual data after the frame has been fully rendered. Such a difference is enabled by the use of the motion vectors generated in the geometry pass instead of the codec motion estimation that would traditionally be used - that is to say that instead of using inter-frame motion estimation as part of an existing video codec (such as HEVC), an alternative approach is adopted in which motion vector data from the rendering itself is utilised. Codec motion estimation is performed on the basis of the final rendered frame, and as such this cannot be performed earlier in the rendering process unlike in the presently presented methods.

The advantages of such a process can be significant due to the relative processing costs associated with each of the passes - the geometry pass is typically cheaper (and therefore faster), while the lighting pass is more computationally expensive (and therefore slower). Therefore transmitting the motion vector information without waiting for the lighting pass to be completed can lead to a significantly earlier beginning of the motion compensation process at the client. Based on network conditions and the specific implementation details, it is considered that the motion compensation can be performed before the residual data is received - and therefore the updating of the image can be performed immediately (or with a very low latency).

It is also considered advantageous in that implementations according to the present disclosure are able to be provided in accordance with existing codecs - rather than requiring that new codecs are developed. This is because the encoding of data can be performed with knowledge of the decoder-side operations; and as such while different data is encoded compared to previous arrangements this can still be provided in a form that is compatible with those operations. As such, implementations of the present disclosure can be provided in an efficient and effective manner as compatibility with a range of decoders can be provided.

A number of modifications and variations of the method described above are envisaged as a part of the present disclosure.

In some implementations, it is considered that a game engine may not generate a velocity buffer, or that a velocity buffer is otherwise not accessible. In such implementations a modification may be provided in which the codec motion estimation process is applied to one or more of the geometry buffers that are available after the geometry pass has been executed. This may include the depth buffer, for example, with this step being performed between steps 310 and 320 of Figure 3. The result of this estimation process is the transmitted to the client in place of the motion vectors in step 310 of Figure 3. Once these results have been received, the client then performs a modified motion compensation process utilising these results (modifying step 410 of Figure 4). In other words, the client would be configured to perform a codec motion compensation process using the results of the codec motion estimation process.

While it is typically considered advantageous to use the residual data transmitted by the server to update the motion-compensated image, in some cases this is not possible or is not desirable. For example, under poor network conditions (such as high or variable latency, or high levels of packet loss) or when a client device has sufficient processing capability it may be considered preferable to utilise a trained machine learning model to perform an infilling process on the motion-compensated image. Such a model can be used to generate image data for parts of the image that are missing - in other words, image regions which are not associated with pixel data due to the motion compensation process.

Infilling can be a time consuming process, however given that a small number of pixels would be likely to be required to be infilled with each frame (due to high frame rates being commonplace, limiting the amount of motion that is possible between frames) the amount of time that the process would take can be reduced significantly. The size of areas requiring infilling can also be reduced compared to some common tasks (such as extending images to a larger size, or removing an object from an image), thereby improving the expected accuracy of the infilling due to the reduced likelihood of unexpected objects or the like bring present in those areas. As such, infilling may be suitable in many cases despite such known technical challenges.

In some cases, infilling processes can be triggered on the basis of any one or more conditions being met; examples of such conditions include an above-threshold network latency, a below-threshold network bandwidth or quality (based upon packet loss, for example), above-threshold client processing capabilities, below-threshold average magnitude and/or quantity of motion vectors, and/or below-threshold amount of infilling required (for instance, expressed as a percentage of pixels in an image). Any combination of these conditions may be considered separately, such that any condition being met triggers the infilling in place of using residual data, or a plurality of these conditions may be required to be met simultaneously. Of course, more complex combinations may be considered too - such as having multiple thresholds for one or more of the conditions, and the triggering being based upon a combination of which thresholds have been met. This can lead to three easily-met thresholds causing a triggering or one harder-to-meet threshold causing the triggering - this more flexible approach can lead to a more robust implementation.

The machine learning model which performs the infilling may be a general image infilling model, or it may be trained specifically upon the source content (such as a particular video game). Alternatively, the model may be trained on a specific portion of the content (such as a particular level of a game) or upon a more broad dataset - such as multiple games in a same genre or series, or games having the same camera type (first or third person).

While the above discussion refers to performing processing in the unit of an entire image, such that a geometry pass is considered complete only when the entire frame has been processed (for example), this is not considered an essential feature. In some implementations it may be considered advantageous to operate on a per-strip or per-tile basis, for example; any suitable division of the image may be considered, however. This may be particularly suitable when the screen space is divided between a number of different GPUs sharing memory, with each of the GPUs assigned to a different portion (such as a tile or strip) of the screen space.

As each GPU finishes its geometry pass processing, the system is notified and transmitting of the motion vectors can be performed for the corresponding portion of the screen space. The client can then be configured to perform the motion compensation on an equivalent basis (per-tile or per-strip) as it receives corresponding motion vector information. Residual information may still be generated on a per-image basis, or it may be generated on the same basis (that is, for a given division of the screen space).

In some implementations, slice- or tile-based encoding of the image may be utilised; this enables each of the different parts of the image to be encoded in parallel and streamed as soon as they are encoded. This means that the transmission of parts of the image can be started with a lower latency, as the time taken to encode the fastest portion of the image is expected to be shorter than the amount of time required to encode the entire image. Here, this may refer to the encoding of the residual information for example.

Another instance in which such an approach may be taken is in the case in which raytracing is used rather than rasterization during the rendering process. In this case, the renderer can determine how the screen space should be sampled - such as selecting tiles or strips in the screen space. In some cases, the tiles may be based around codec superblocks so as to aid compatibility with particular codecs. By dividing the screen space in this manner, encoding can be performed for each portion of the screen space individually, which can enable earlier encoding of the content. In such implementations a modified API may be provided to the video source (such as a video game) to handle the divided processing - such as identifying which buffers are complete as the geometry pass is executed.

Figure 5 schematically illustrates a server configured to stream video content comprising a plurality of rendered image frames to a client device, the server being provided as a part of a system for providing content to users over a network connection. The server comprises a geometry processing unit 500, an optional motion estimation unit 510, a transmitting unit 520, a lighting processing unit 530, and a residual calculation unit 540.

The functionality of these units may be provided by any suitable hardware; for instance, the geometry processing and lighting processing may be performed as a part of a rendering process (which can additionally include post-processing steps and the like) executed by one or more GPUs.

The geometry processing unit 500 is configured to perform a geometry pass on a scene being rendered to generate geometric information, wherein the geometry processing unit is configured to output one or more motion vectors. These motion vectors may be an output of the geometry pass, for example, as one of a number of geometry buffers that may be generated. Other examples include depth buffers and information about normals within the geometry.

The motion estimation unit 510 is configured, in the case that the geometry pass does not output motion vectors, to generate the one or more motion vectors by applying a motion estimation process to a geometry buffer (other than a motion vector/velocity buffer) that is generated by the geometry pass. For example, the depth buffer may be used as the basis for a motion estimation process; the depth information may be suitable for this as the identification of corresponding groups of depths between images can be used to infer a velocity. For instance, if a particular object moved to the left then this would be represented in the depth data by a pattern of depth information representing that object having shifted to different pixel locations or the like.

The transmitting unit 520 is configured to transmit the one or more motion vectors and the residual information to the client device at respective times in the content generation process. The transmitting unit 520 may be configured to transmit this data as soon as it is made available, in some cases, although the motion vectors should be sent before the residual information in any case. It may be considered advantageous if the transmitting unit 520 is configured to begin transmitting the one or more motion vectors before the initiation and/or completion of the lighting pass executed by the lighting processing unit 530. In some implementations, the one or more motion vectors and/or the residual information is transmitted with an identifier that indicates that they correspond to the same image frame.

The lighting processing unit 530 is configured to perform a lighting pass on the scene being rendered in dependence upon the generated geometric information. The lighting pass may calculate the scene's lighting on a pixel-by-pixel basis for each fragment, using the geometrical information generated by the previous stage; however any other approach to generating lighting information may be utilised as appropriate.

The residual calculation unit configured to generate residual information indicative of a difference between an image frame rendered on the basis of the geometry pass and the lighting pass, and a preceding rendered image frame in the video content which has been motion compensated by applying the one or more motion vectors to the preceding rendered image frame. The residual information represents the difference between two successive image frames, with the previous image frame being motion-compensated as a prediction of the current image frame based upon the motion vectors. The residual can therefore be generated by subtracting the motion-compensated previous frame from the current image frame, for example.

As discussed above, in some implementations each frame may processed on a per-portion basis such that motion vectors and/or residuals are generated on the basis of a respective portion of an image frame. The portions may be slices or tiles selected in accordance with a selected rendering technique, such as raytracing, or the portions may be slices or tiles selected in accordance with the respective operation of a plurality of GPUs used to generate the rendered image frames (for instance, with the tiles/slices corresponding to respective GPUs on a one-to-one or many-to-one basis). In such implementations, the geometry pass may be performed in a number of parallel (or at least partially simultaneous) processes each handling a different part of the scene (for example), and/or the lighting processing may be similarly divided.

The arrangement of Figure 5 is an example of a processor (for example, a GPU and/or CPU located in a server or any other computing device configured to stream content to a client) that is operable to stream video content comprising a plurality of rendered image frames to a client device, and in particular is operable to:
perform, using a geometry processing unit, a geometry pass on a scene being rendered to generate geometric information, wherein the geometry processing unit is configured to output one or more motion vectors;
generate, in the case that the geometry pass does not output motion vectors, the one or more motion vectors by applying a motion estimation process to a geometry buffer that is generated by the geometry pass;
transmit the one or more motion vectors to the client device;
perform a lighting pass on the scene being rendered in dependence upon the generated geometric information;
generate residual information indicative of a difference between an image frame rendered on the basis of the geometry pass and the lighting pass, and a preceding rendered image frame in the video content which has been motion compensated by applying the one or more motion vectors to the preceding rendered image frame; and
transmit the residual information to the client device.

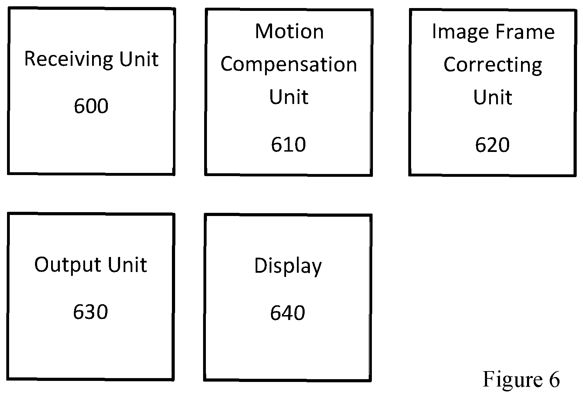

Figure 6 schematically illustrates a client device receiving the streamed video content from the server of Figure 5, the client device comprising a receiving unit 600, a motion compensation unit 610, an image frame correcting unit 620, an output unit 630, and an optional display 640. The client device may be implemented in accordance with the entertainment system 10 of Figure 1, for example.

The receiving unit 600 is configured to receive the one or more motion vectors and the residual information transmitted by the transmitting unit of the server; in accordance with the above discussion, it is expected that the motion vectors are received before the residual information.

The motion compensation unit 610 is configured to perform a motion compensation process on the preceding rendered image frame in the video content using the received motion vectors to generate a motion-compensated image frame. The motion compensation unit 610 may be configured to initiate the motion compensation process before the residual information is received, in some implementations.

The image frame correcting unit 620 is configured to correct the motion-compensated image frame using the received residual information to obtain a corrected image frame. In other words, the image frame correcting unit 620 is configured to use the motion-compensated image frame output by the motion compensation unit 610 as the basis for generating an image frame for display (the corrected image frame) by modifying the motion-compensated image frame to incorporate the residual information which is representative of the difference between the consecutive frames as rendered at the server.

In some cases, the residual information may be incomplete or unavailable; in such cases, the image frame correcting unit 620 may be configured to perform an infilling process to correct the motion-compensated image frame instead of, or in addition to, using the received residual information. The image frame correcting unit 620 may be configured to perform the infilling process in response to any suitable criteria; for example, the detection of an above-threshold network latency, a below-threshold network quality, a below-threshold average magnitude of received motion vectors, and/or a below-threshold quantity of received motion vectors.

The output unit 630 is configured to output the corrected image frame for display.

The optional display 640 is configured to display the corrected image frames to a user; such a feature is regarded as optional as the client device may not have an integrated display (such as a games console being used with a television) and as such the display 640 may be provided separately to the client device.

The arrangement of Figure 6 is an example of a processor (for example, a GPU and/or CPU located in a client device configured to receive video content from a server or the like) that is operable to receive streamed video content comprising a plurality of rendered image frames, and in particular is operable to:
receive, at a receiving unit of the client device, the one or more motion vectors and the residual information transmitted by the transmitting unit of the server;
perform a motion compensation process on the preceding rendered image frame in the video content using the received motion vectors to generate a motion-compensated image frame;
correct the motion-compensated image frame using the received residual information to obtain a corrected image frame; and
output the corrected image frame for display.

The client device may be provided in accordance with the entertainment system 10 of Figure 1, for example, with the CPU 20 and GPU 30 providing processing capabilities for implementing these functions.

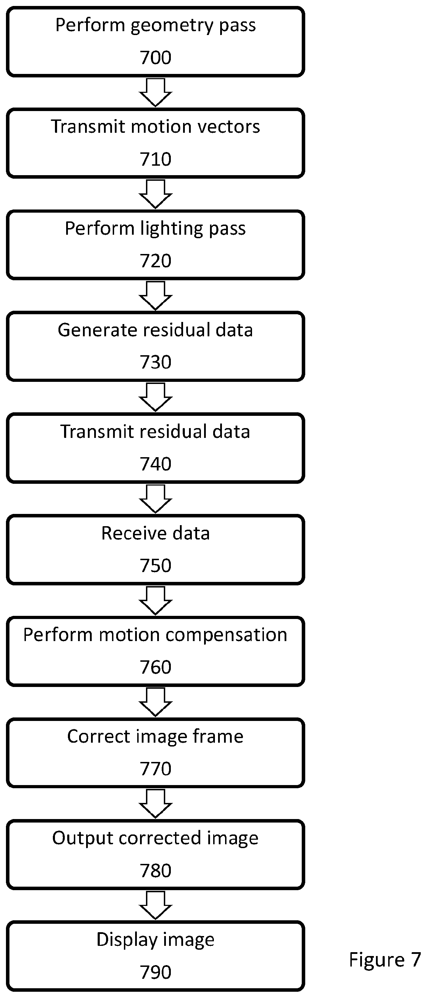

Figure 7 schematically illustrates a video content distribution method; steps 700-740 are implemented by the server device described with reference to Figure 5 above, while the remaining steps are performed in accordance with the discussion of the client device of Figure 6.

While shown here as a single process for clarity, it is of course considered that there is overlap between the different steps in a number of places. For instance, step 760 may be performed before step 740, reflecting the fact that the motion vectors are expected to be received earlier than the residual information. Similarly, the step 750 of receiving data is shown as a single step despite the different data (motion vectors and residual information) being received at different times.

A step 700 comprises performing, using a geometry processing unit, a geometry pass on a scene being rendered to generate geometric information, wherein the geometry processing unit is configured to output one or more motion vectors.

A step 710 comprises transmitting the one or more motion vectors to the client device.

A step 720 comprises performing a lighting pass on the scene being rendered in dependence upon the generated geometric information.

A step 730 comprises generating residual information indicative of a difference between an image frame rendered on the basis of the geometry pass and the lighting pass, and a preceding rendered image frame in the video content which has been motion compensated by applying the one or more motion vectors to the preceding rendered image frame.

A step 740 comprises transmitting the residual information to the client device.

A step 750 comprises receiving, at a receiving unit of the client device, the one or more motion vectors and the residual information transmitted by the transmitting unit of the server.

A step 760 comprises performing a motion compensation process on the preceding rendered image frame in the video content using the received motion vectors to generate a motion-compensated image frame.

A step 770 comprises correcting the motion-compensated image frame using the received residual information to obtain a corrected image frame.

A step 780 comprises outputting the corrected image frame for display.

A step 790 comprises displaying the corrected image frame by a display device.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A system comprising a server configured to stream video content comprising a plurality of rendered image frames to a client device, the server comprising:
a geometry processing unit configured to perform a geometry pass on a scene being rendered to generate geometric information, wherein the geometry processing unit is configured to output one or more motion vectors;
a transmitting unit configured to transmit the one or more motion vectors to the client device;
a lighting processing unit configured to perform a lighting pass on the scene being rendered in dependence upon the generated geometric information; and
a residual calculation unit configured to generate residual information indicative of a difference between an image frame rendered on the basis of the geometry pass and the lighting pass, and a preceding rendered image frame in the video content which has been motion compensated by applying the one or more motion vectors to the preceding rendered image frame,
wherein the transmitting unit is configured to transmit the residual information to the client device.

2. A system according to claim 1, wherein the transmitting unit is configured to begin transmitting the one or more motion vectors before the initiation and/or completion of the lighting pass executed by the lighting processing unit.

3. A system according to any preceding claim, wherein the one or more motion vectors and/or the residual information is transmitted with an identifier that indicates that they correspond to the same image frame.

4. A system according to any preceding claim, wherein each frame is processed on a per-portion basis such that motion vectors and/or residuals are generated on the basis of a respective portion of an image frame.

5. A system according to claim 4, wherein the portions are slices or tiles selected in accordance with a selected rendering technique.

6. A system according to claim 4, wherein the portions are slices or tiles selected in accordance with the respective operation of a plurality of GPUs used to generate the rendered image frames.

7. A system according to any preceding claim, comprising a motion estimation unit which is configured, in the case that the geometry pass does not output motion vectors, to generate the one or more motion vectors by applying a motion estimation process to a geometry buffer that is generated by the geometry pass.

8. A system according to any preceding claim, wherein the system comprises the client device receiving the streamed video content, the client device comprising:
a receiving unit configured to receive the one or more motion vectors and the residual information transmitted by the transmitting unit of the server;
a motion compensation unit configured to perform a motion compensation process on the preceding rendered image frame in the video content using the received motion vectors to generate a motion-compensated image frame;
an image frame correcting unit configured to correct the motion-compensated image frame using the received residual information to obtain a corrected image frame; and
an output unit configured to output the corrected image frame for display.

9. A system according to claim 8, wherein the motion compensation unit is configured to initiate the motion compensation process before the residual information is received.

10. A system according to claim 8 or claim 9, wherein the image frame correcting unit is configured to perform an infilling process to correct the motion-compensated image frame instead of, or in addition to, using the received residual information.

11. A system according to claim 10, wherein the image frame correcting unit is configured to perform the infilling process in response to the detection of an above-threshold network latency, a below-threshold network quality, a below-threshold average magnitude of received motion vectors, and/or a below-threshold quantity of received motion vectors.

12. A method for operating a server in a system configured to stream video content comprising a plurality of rendered image frames to a client device, the method comprising:
performing, using a geometry processing unit, a geometry pass on a scene being rendered to generate geometric information, wherein the geometry processing unit is configured to output one or more motion vectors;
transmitting the one or more motion vectors to the client device;
performing a lighting pass on the scene being rendered in dependence upon the generated geometric information;
generating residual information indicative of a difference between an image frame rendered on the basis of the geometry pass and the lighting pass, and a preceding rendered image frame in the video content which has been motion compensated by applying the one or more motion vectors to the preceding rendered image frame; and
transmitting the residual information to the client device.

13. A method according to claim 12, further comprising:
receiving, at a receiving unit of the client device, the one or more motion vectors and the residual information transmitted by the transmitting unit of the server;
performing a motion compensation process on the preceding rendered image frame in the video content using the received motion vectors to generate a motion-compensated image frame;
correcting the motion-compensated image frame using the received residual information to obtain a corrected image frame; and
outputting the corrected image frame for display.

14. Computer software comprising instructions which, when the software is executed by a computer, causes the computer to carry out the method of claim 12 or 13.

15. A non-transitory machine-readable storage medium which stores computer software according to claim 14.
